# EUROPEAN PATENT APPLICATION

(11) **EP 4 714 675 A2**
(43) Date of publication of application: **25.03.2026**
(21) Application number: 25190799.4
(22) Date of filing: 21.07.2025
(51) Int. Cl.: B60C 9/22, B60C 11/03, B60C 11/12, B60C 9/20

(54) **TIRE**

(30) Priority: 27.08.2024 JP 2024145922
(71) Applicant: Sumitomo Rubber Industries, Ltd., Kobe-shi, Hyogo 651-0072 (JP)
(72) Inventor: Shuhei, ITO, Kobe-shi, 651-0072 (JP)
(74) Representative: Manitz Finsterwald Patent- und Rechtsanwaltspartnerschaft mbB

(57) **Abstract**

The present invention is a tire 1 having a tread portion 2. The tread portion 2 has circumferential grooves 3 including a shoulder circumferential groove 3A disposed closest to a tread end Te, and land portions 4 including a shoulder land portion 4A demarcated between the shoulder circumferential groove 3A and the tread end Te. The shoulder land portion 4A has a shoulder block 6A demarcated by a shoulder lateral groove 5A. A groove depth d1 of the shoulder lateral groove 5A is less than a groove depth d2 of the shoulder circumferential groove 3A. A first shoulder sipe 7A is disposed in a groove bottom 5a of the shoulder lateral groove 5A. The first shoulder sipe 7A includes a first narrow portion 7a having a small width, and a first wide portion 7b having a larger width than the first narrow portion 7a. In the shoulder block 6A, a maximum length L1 in the tire circumferential direction is greater than a maximum width W1 in the tire axial direction.

## Description

### BACKGROUND OF THE INVENTION

### Field of the Invention

The present invention relates to a tire having a tread portion.

### Background Art

To date, a tire having a tread portion that allows achievement of both rolling resistance performance and wet performance, has been known. For example, Japanese Laid-Open Patent Publication No. 2023-180553 suggests a tire in which a positional relationship between a shoulder circumferential groove and a band layer is specified.

However, in a case where the tire is used for a steered wheel, uneven wear is likely to occur in a shoulder region, and this tendency is significant in a tire in which shoulder blocks are demarcated by shoulder lateral grooves as disclosed in Japanese Laid-Open Patent Publication No. 2023-180553.

The present invention has been made in view of the aforementioned circumstances, and a main object of the present invention is to provide a tire that allows achievement of both wet performance and resistance to shoulder uneven wear.

### SUMMARY OF THE INVENTION

The present invention is directed to a tire including a tread portion. The tread portion has a plurality of circumferential grooves extending in a tire circumferential direction, and a plurality of land portions demarcated by the circumferential grooves. The circumferential grooves include a shoulder circumferential groove disposed closest to a tread end. The land portions include a shoulder land portion demarcated between the shoulder circumferential groove and the tread end. The shoulder land portion has a plurality of shoulder lateral grooves extending across the shoulder land portion, and a shoulder block demarcated by the shoulder lateral grooves. A groove depth of the shoulder lateral groove in a tire radial direction is less than a groove depth of the shoulder circumferential groove in the tire radial direction. A first shoulder sipe extending from the shoulder circumferential groove to the tread end is disposed in a groove bottom of the shoulder lateral groove. The first shoulder sipe includes a first narrow portion having a small width in a direction orthogonal to a sipe longitudinal direction on an outer side in the tire radial direction, and a first wide portion having a large width in the direction orthogonal to the sipe longitudinal direction on a side inward of the first narrow portion in the tire radial direction. A maximum length in the tire circumferential direction is greater than a maximum width in a tire axial direction in the shoulder block.

The tire of the present invention has the above-described configuration, and can thus allow achievement of both wet performance and resistance to shoulder uneven wear.

### BRIEF DESCRIPTION OF THE DRAWINGS

FIG. 1 is a development of a tread portion of a tire according to one embodiment of the present invention;
FIG. 2 is a cross-sectional view taken along a line A-A in FIG. 1;
FIG. 3 is a tire meridional cross-sectional view of the tire;
FIG. 4 is a cross-sectional view of a first shoulder sipe according to another embodiment;
FIG. 5 is a cross-sectional view of a first shoulder sipe according to still another embodiment;
FIG. 6 is a cross-sectional view of a first shoulder sipe according to still another embodiment;
FIG. 7 is a partial development of a tread portion of a tire according to a second embodiment; and
FIG. 8 is a cross-sectional view taken along a line B-B in FIG. 7.

### DETAILED DESCRIPTION

One embodiment of the present invention will be described below in detail with reference to the drawings.

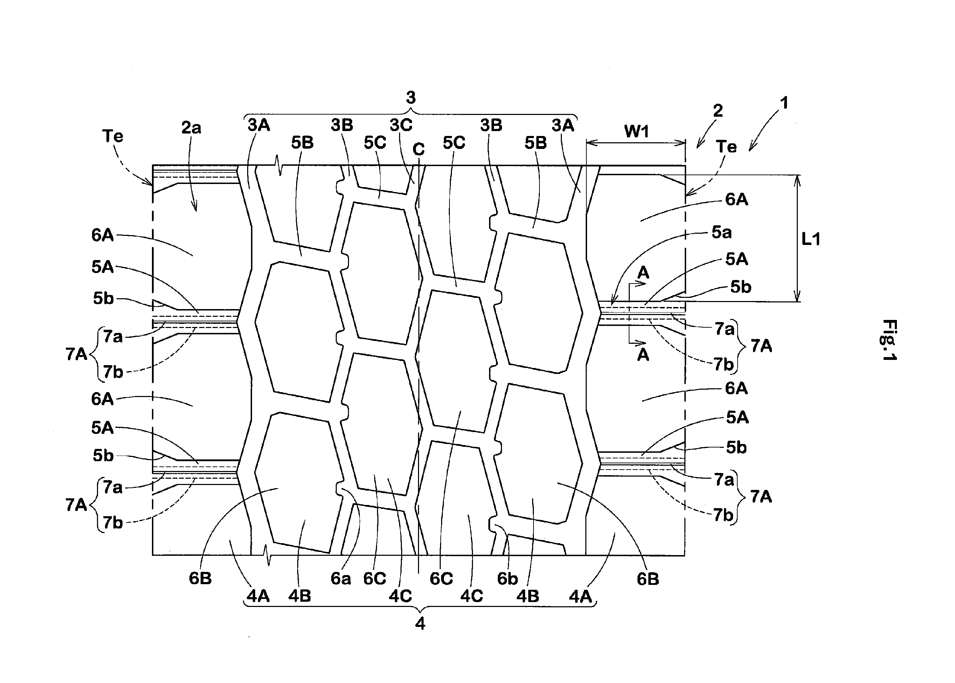

FIG. 1 is a tread development of a tread portion 2 of a tire 1 according to the present embodiment. As shown in FIG. 1, the tire 1 of the present embodiment has the tread portion 2. Preferable examples of the tire 1 include a heavy duty pneumatic tire.

The tire 1 is not limited thereto, and is applicable to various tires 1 such as a pneumatic tire for a passenger car, an airless tire, and a tire for an industrial machine. The tire 1 of the present embodiment is suitably used as, for example, an all-season tire having an aspect ratio of 70% or less.

The tread portion 2 of the present embodiment has a plurality of circumferential grooves 3 extending in the tire circumferential direction, and a plurality of land portions 4 demarcated by the plurality of circumferential grooves 3. The tread portion 2 having such a configuration can inhibit deformation of the land portion 4 during contact with the ground and contributes to enhancement of resistance to shoulder uneven wear in the tire 1.

In the present embodiment, the plurality of circumferential grooves 3 include a pair of shoulder circumferential grooves 3A disposed closest to tread ends Te. The pair of shoulder circumferential grooves 3A are preferably disposed across the tire equator C on both sides in the tire axial direction.

The "tread end Te" refers to an outermost ground contact position in the tire axial direction in a state where a standardized load is applied to the tire 1 in a standardized state and the tire 1 is brought into contact with a plane at a camber angle of 0° when the tire 1 is a heavy duty pneumatic tire. The "tire equator C" refers to the center position between a pair of the tread ends Te in the tire axial direction on a ground contact surface 2a.

In a case where the tire 1 is a pneumatic tire, the "standardized state" refers to a state where the tire 1 is mounted on a standardized rim and adjusted to have a standardized internal pressure, and no load is applied to the tire 1. Hereinafter, unless otherwise specified, dimensions and the like of components of the tire 1 are represented by values measured in the standardized state.

In a case where a standard system including a standard on which the tire 1 is based is provided, the "standardized rim" represents a rim defined for each tire by the standard. Examples of the standardized rim include the "standard rim" in the JATMA standard, the "Design Rim" in the TRA standard, and the "Measuring Rim" in the ETRTO standard. In a case where a standard system including a standard on which the tire 1 is based is not provided, the "standardized rim" represents a rim which has the smallest rim width among rims on which the tire 1 can be mounted and which do not cause air leakage and have the smallest rim diameter.

In a case where a standard system including a standard on which the tire 1 is based is provided, the "standardized internal pressure" represents an air pressure defined for each tire by the standard. Examples of the standardized internal pressure include the "maximum air pressure" in the JATMA standard, the maximum value recited in the table "TIRE LOAD LIMITS AT VARIOUS COLD INFLATION PRESSURES" in the TRA standard, and the "INFLATION PRESSURE" in the ETRTO standard. In a case where a standard system including a standard on which the tire 1 is based is not provided, the "standardized internal pressure" represents an air pressure defined for each tire by a manufacturer or the like.

In a case where a standard system including a standard on which the tire 1 is based is provided, the "standardized load" represents a load defined for each tire by the standard. Examples of the standardized load include the "maximum load capacity" in the JATMA standard, the maximum value recited in the table "TIRE LOAD LIMITS AT VARIOUS COLD INFLATION PRESSURES" in the TRA standard, and the "LOAD CAPACITY" in the ETRTO standard. In a case where a standard system including a standard on which the tire 1 is based is not provided, the "standardized load" represents a load defined for each tire by a manufacturer or the like as the maximum load that is applicable when the tire 1 is used.

For example, the plurality of circumferential grooves 3 may include a middle circumferential groove 3B disposed inward of the shoulder circumferential groove 3A in the tire axial direction, and a crown circumferential groove 3C disposed inward of the middle circumferential groove 3B in the tire axial direction. The circumferential grooves 3 having such a configuration contribute to enhancement of wet performance of the tire 1.

In the present embodiment, the plurality of land portions 4 include a shoulder land portion 4A demarcated between the shoulder circumferential groove 3A and the tread end Te. In the present embodiment, the shoulder land portion 4A has a plurality of shoulder lateral grooves 5A extending across the shoulder land portion 4A, and a plurality of shoulder blocks 6A demarcated by the plurality of shoulder lateral grooves 5A. The tire 1 including the land portions 4 having such a configuration can enhance a grip force by an edge effect of the shoulder blocks 6A during running on a snow road surface, so that on-snow performance of the tire 1 can be enhanced.

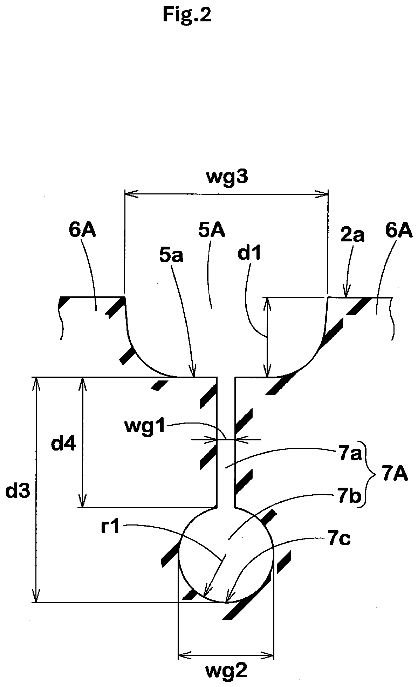

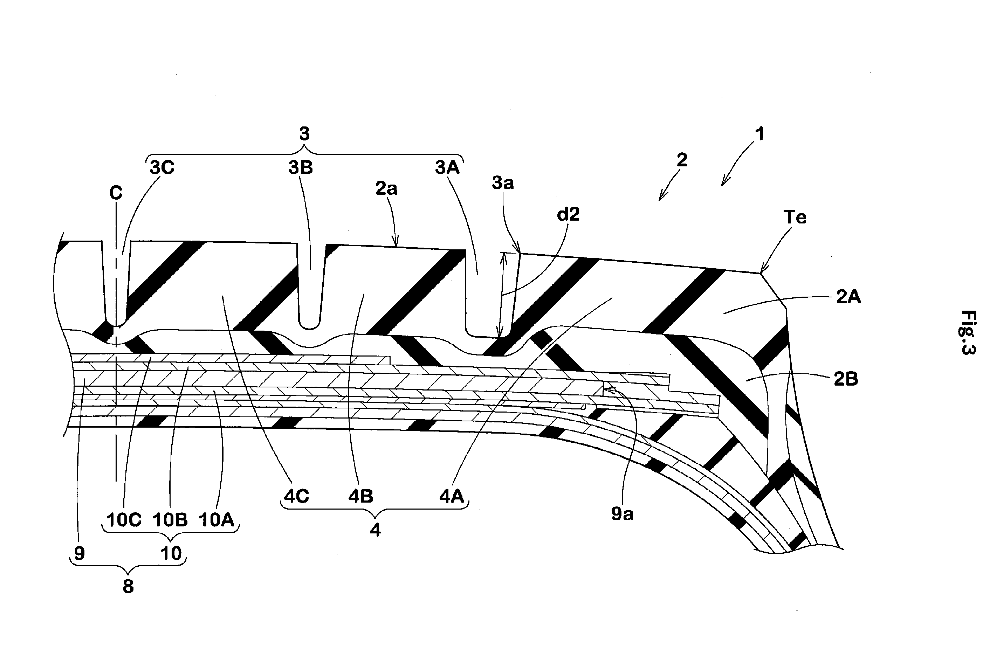

FIG. 2 is a cross-sectional view taken along a line A-A in FIG. 1. FIG. 3 is a tire meridional cross-sectional view of the tire 1 in the standardized state. As shown in FIG. 2 and FIG. 3, in the present embodiment, the groove depth d1 of the shoulder lateral groove 5A in the tire radial direction is less than the groove depth d2 of the shoulder circumferential groove 3A in the tire radial direction. The shoulder lateral groove 5A having such a configuration can enhance drainage performance while maintaining stiffness of the shoulder land portion 4A, and a high snow column shearing force can also be exhibited.

As shown in FIG. 1 and FIG. 2, a first shoulder sipe 7A extending from the shoulder circumferential groove 3A to the tread end Te is preferably disposed in a groove bottom 5a of the shoulder lateral groove 5A. The sipe refers to a cut portion having a width of less than 1.0 mm in the direction orthogonal to the sipe longitudinal direction, and is clearly distinguished from a groove having a groove width of 1.0 mm or more. The first shoulder sipe 7A having such a configuration allows the shoulder land portion 4A to maintain high stiffness, and can enhance resistance to shoulder uneven wear in the tire 1.

The first shoulder sipe 7A preferably includes a first narrow portion 7a having a small width in the direction orthogonal to the sipe longitudinal direction on the outer side in the tire radial direction, and a first wide portion 7b having a large width in the direction orthogonal to the sipe longitudinal direction on the side inward of the first narrow portion 7a in the tire radial direction. In the present embodiment, the minimum width wg1 of the first narrow portion 7a in the direction orthogonal to the sipe longitudinal direction is less than 1.0 mm. At least the first wide portion 7b is opened at the shoulder circumferential groove 3A and the tread end Te. In the present embodiment, the first narrow portion 7a and the first wide portion 7b are opened at the shoulder circumferential groove 3A and the tread end Te. The first shoulder sipe 7A having such a configuration can allow drainage to be performed also when the shoulder lateral groove 5A has disappeared due to wear, and can enhance wet performance of the tire 1 at the late stage of wear.

As shown in FIG. 1, in the shoulder block 6A of the present embodiment, the maximum length L1 in the tire circumferential direction is greater than the maximum width W1 in the tire axial direction. The shoulder block 6A having such a configuration allows high stiffness to be maintained, and can enhance resistance to shoulder uneven wear in the tire 1. Therefore, the tire 1 of the present embodiment allows achievement of both wet performance and resistance to shoulder uneven wear.

In a more preferable mode, each of the plurality of circumferential grooves 3 zigzags in the tire circumferential direction. The circumferential grooves 3 having such a configuration can allow high traction performance to be exhibited on a snow road surface, and enhance on-snow performance of the tire 1. The plurality of circumferential grooves 3 are not limited to such a configuration. For example, each of the circumferential grooves 3 may extend linearly in the tire circumferential direction, or the circumferential grooves 3 that linearly extend and the circumferential grooves 3 that zigzag may be mixed.

For example, the shoulder lateral groove 5A has a shoulder wide portion 5b having a groove width that is gradually increased on the tread end Te side. The shoulder lateral groove 5A having such a configuration allows water to be smoothly discharged outward of the tread end Te and can enhance drainage performance.

The shoulder block 6A has a polygonal shape in a planar view, and has an octagonal shape in the present embodiment, by the circumferential groove 3 that zigzags and the shoulder wide portion 5b. The shoulder block 6A having such a configuration can allow an edge effect to be exhibited in multiple directions, and can enhance on-snow performance of the tire 1. The shape of the shoulder block 6A in a planar view is not limited to such a shape, and may be, for example, any one of a quadrangular shape to a heptagonal shape, or a shape including a curve.

The maximum length L1 of the shoulder block 6A in the tire circumferential direction is preferably 1.2 or more times the maximum width W1 of the shoulder block 6A in the tire axial direction. In a case where the maximum length L1 of the shoulder block 6A is 1.2 or more times the maximum width W1, the shoulder block 6A can assuredly maintain high stiffness, and resistance to shoulder uneven wear in the tire 1 can be enhanced. From such a viewpoint, the maximum length L1 of the shoulder block 6A is more preferably 1.3 or more times the maximum width W1 of the shoulder block 6A.

The maximum length L1 of the shoulder block 6A in the tire circumferential direction is preferably 1.6 or less times the maximum width W1 of the shoulder block 6A in the tire axial direction. In a case where the maximum length L1 of the shoulder block 6A is 1.6 or less times the maximum width W1, the volume of the shoulder lateral groove 5A can be assured, and wet performance of the tire 1 can be enhanced. From such a viewpoint, the maximum length L1 of the shoulder block 6A is more preferably 1.5 or less times the maximum width W1 of the shoulder block 6A.

Thus, the maximum length L1 of the shoulder block 6A in the tire circumferential direction is preferably 1.2 to 1.6 times the maximum width W1 of the shoulder block 6A in the tire axial direction, and more preferably 1.3 to 1.5 times the maximum width W1. Combination of the upper limit value and the lower limit value in these numerical value ranges can be discretionarily selected.

As shown in FIG. 3, for example, the tread portion 2 includes a cap rubber layer 2A and a base rubber layer 2B. The tread portion 2 having such a configuration contributes to enhancement of resistance to shoulder uneven wear in the tire 1 by forming the cap rubber layer 2A of rubber having high stiffness. The tread portion 2 can enhance rolling resistance performance of the tire 1 by forming the base rubber layer 2B of rubber that has low heat generation properties.

The circumferential groove 3 is preferably disposed in the cap rubber layer 2A. In the tread portion 2 having such a configuration, the base rubber layer 2B may be prevented from being exposed at the ground contact surface 2a even at the late stage of wear, and the tread portion 2 contributes to maintaining of resistance to shoulder uneven wear in the tire 1 at the late stage of wear.

The tread portion 2 preferably includes a reinforcing layer 8 disposed inward of the land portion 4 in the tire radial direction. For example, the reinforcing layer 8 is disposed inward of the base rubber layer 2B in the tire radial direction. The reinforcing layer 8 having such a configuration contributes to enhancement of stiffness of the tread portion 2 by a hoop effect.

In the present embodiment, the reinforcing layer 8 includes a band layer 9 in which a steel cord is helically wound at an angle of 5° or less relative to the tire circumferential direction. That is, the band layer 9 is formed as a so-called jointless band ply. The band layer 9 having such a configuration can effectively inhibit deformation during running, and enhance resistance to shoulder uneven wear in the tire 1 even in the tire 1 in which the aspect ratio is 70% or less and deformation is large at the shoulder land portion 4A during running.

An end portion 9a of the band layer 9 in the tire axial direction is preferably disposed tire-axially outward of an end portion 3a of the shoulder circumferential groove 3A on the outermost side in the tire axial direction. The band layer 9 having such a configuration can enhance stiffness of the shoulder land portion 4A and enhance resistance to shoulder uneven wear in the tire 1 even in the tire 1 in which the aspect ratio is 70% or less and deformation is large at the shoulder land portion 4A during running.

The reinforcing layer 8 includes a belt layer 10 having a plurality of belt plies in which steel cords are aligned at an angle of 10 to 50° relative to the tire circumferential direction. In the present embodiment, the reinforcing layer 8 includes the belt layer 10 having a first belt ply 10A, a second belt ply 10B, and a third belt ply 10C. The plurality of belt plies preferably include belt plies inclined in different directions relative to the tire circumferential direction. The belt layer 10 having such a configuration can enhance stiffness of the tread portion 2 by a hoop effect.

For example, the first belt ply 10A is disposed on the innermost side in the tire radial direction. For example, the second belt ply 10B is disposed between the first belt ply 10A and the third belt ply 10C in the tire radial direction. For example, the third belt ply 10C is disposed on the outermost side in the tire radial direction. The plurality of belt plies are not limited to three belt plies, and may be, for example, two belt plies, or four or more belt plies.

At least one of the belt plies of the belt layer 10 is disposed inward of the band layer 9 in the tire radial direction. In the present embodiment, the first belt ply 10A is disposed inward of the band layer 9 in the tire radial direction. The belt layer 10 having such a configuration can reduce tension that acts on the band layer 9, and enhance durability of the tire 1.

As shown in FIG. 2 and FIG. 3, the groove depth d1 of the shoulder lateral groove 5A in the tire radial direction is preferably 0.15 or more times the groove depth d2 of the shoulder circumferential groove 3A in the tire radial direction. In a case where the groove depth d1 of the shoulder lateral groove 5A is 0.15 or more times the groove depth d2 of the shoulder circumferential groove 3A, a sufficient groove volume can be assured, and drainage performance at the initial stage of wear can be assured, so that wet performance of the tire 1 can be enhanced. From such a viewpoint, the groove depth d1 of the shoulder lateral groove 5A is more preferably 0.2 or more times the groove depth d2 of the shoulder circumferential groove 3A.

The groove depth d1 of the shoulder lateral groove 5A in the tire radial direction is preferably 0.45 or less times the groove depth d2 of the shoulder circumferential groove 3A in the tire radial direction. In a case where the groove depth d1 of the shoulder lateral groove 5A is 0.45 or less times the groove depth d2 of the shoulder circumferential groove 3A, the shoulder land portion 4A can maintain high stiffness, and resistance to shoulder uneven wear in the tire 1 can be enhanced. From such a viewpoint, the groove depth d1 of the shoulder lateral groove 5A is more preferably 0.4 or less times the groove depth d2 of the shoulder circumferential groove 3A.

Thus, the groove depth d1 of the shoulder lateral groove 5A in the tire radial direction is preferably 0.15 to 0.45 times the groove depth d2 of the shoulder circumferential groove 3A in the tire radial direction, and more preferably 0.2 to 0.4 times the groove depth d2. Combination of the upper limit value and the lower limit value in these numerical value ranges can be discretionarily selected.

As shown in FIG. 2, the depth d3 of the first shoulder sipe 7A in the tire radial direction is preferably greater than the groove depth d1 of the shoulder lateral groove 5A in the tire radial direction. The first shoulder sipe 7A having such a configuration allows drainage performance at the late stage of wear to be assuredly ensured, and contributes to enhancement of wet performance of the tire 1 at the late stage of wear.

The depth d3 of the first shoulder sipe 7A in the tire radial direction is preferably 1.1 or more times the groove depth d1 of the shoulder lateral groove 5A in the tire radial direction. In a case where the depth d3 of the first shoulder sipe 7A is 1.1 or more times the groove depth d1 of the shoulder lateral groove 5A, drainage performance at the late stage of wear can be assured, and wet performance of the tire 1 can be enhanced. From such a viewpoint, the depth d3 of the first shoulder sipe 7A is more preferably 1.2 or more times the groove depth d1 of the shoulder lateral groove 5A.

The depth d3 of the first shoulder sipe 7A in the tire radial direction is preferably 5.5 or less times the groove depth d1 of the shoulder lateral groove 5A in the tire radial direction. In a case where the depth d3 of the first shoulder sipe 7A is 5.5 or less times the groove depth d1 of the shoulder lateral groove 5A, the shoulder land portion 4A can maintain stiffness, and resistance to shoulder uneven wear in the tire 1 can be enhanced. From such a viewpoint, the depth d3 of the first shoulder sipe 7A is more preferably 4.5 or less times the groove depth d1 of the shoulder lateral groove 5A.

Thus, the depth d3 of the first shoulder sipe 7A in the tire radial direction is preferably 1.1 to 5.5 times the groove depth d1 of the shoulder lateral groove 5A in the tire radial direction, and more preferably 1.2 to 4.5 times the groove depth d1. Combination of the upper limit value and the lower limit value in these numerical value ranges can be discretionarily selected.

The depth d4 of the first narrow portion 7a of the first shoulder sipe 7A in the tire radial direction is preferably 0.3 or more times the depth d3 of the first shoulder sipe 7A in the tire radial direction. In a case where the depth d4 of the first narrow portion 7a is 0.3 or more times the depth d3 of the first shoulder sipe 7A, the shoulder land portion 4A can maintain stiffness, and resistance to shoulder uneven wear in the tire 1 can be enhanced. From such a viewpoint, the depth d4 of the first narrow portion 7a is more preferably 0.4 or more times the depth d3 of the first shoulder sipe 7A.

The depth d4 of the first narrow portion 7a of the first shoulder sipe 7A in the tire radial direction is preferably 0.8 or less times the depth d3 of the first shoulder sipe 7A in the tire radial direction. In a case where the depth d4 of the first narrow portion 7a is 0.8 or less times the depth d3 of the first shoulder sipe 7A, the first wide portion 7b can assuredly have a sufficient volume, and wet performance of the tire 1 can be enhanced. From such a viewpoint, the depth d4 of the first narrow portion 7a is more preferably 0.7 or less times the depth d3 of the first shoulder sipe 7A.

Thus, the depth d4 of the first narrow portion 7a of the first shoulder sipe 7A in the tire radial direction is preferably 0.3 to 0.8 times the depth d3 of the first shoulder sipe 7A in the tire radial direction, and more preferably 0.4 to 0.7 times the depth d3. Combination of the upper limit value and the lower limit value in these numerical value ranges can be discretionarily selected.

In the present embodiment, the maximum width wg2 of the first wide portion 7b in the direction orthogonal to the sipe longitudinal direction is less than the minimum groove width wg3 of the shoulder lateral groove 5A at the ground contact surface 2a. The first wide portion 7b having such a configuration contributes to maintaining of high stiffness of the shoulder land portion 4A.

The maximum width wg2 of the first wide portion 7b is preferably 0.30 or more times the minimum groove width wg3 of the shoulder lateral groove 5A. In a case where the maximum width wg2 of the first wide portion 7b is 0.30 or more times the minimum groove width wg3 of the shoulder lateral groove 5A, the first wide portion 7b can assuredly have a sufficient volume, and wet performance of the tire 1 can be enhanced. From such a viewpoint, the maximum width wg2 of the first wide portion 7b is more preferably 0.35 or more times the minimum groove width wg3 of the shoulder lateral groove 5A.

The maximum width wg2 of the first wide portion 7b is preferably 0.85 or less times the minimum groove width wg3 of the shoulder lateral groove 5A. In a case where the maximum width wg2 of the first wide portion 7b is 0.85 or less times the minimum groove width wg3 of the shoulder lateral groove 5A, the shoulder land portion 4A can maintain high stiffness, and resistance to shoulder uneven wear in the tire 1 can be enhanced. From such a viewpoint, the maximum width wg2 of the first wide portion 7b is more preferably 0.80 or less times the minimum groove width wg3 of the shoulder lateral groove 5A.

Thus, the maximum width wg2 of the first wide portion 7b is preferably 0.30 to 0.85 times the minimum groove width wg3 of the shoulder lateral groove 5A, and more preferably 0.35 to 0.80 times the minimum groove width wg3. Combination of the upper limit value and the lower limit value in these numerical value ranges can be discretionarily selected.

A bottom portion 7c of the first wide portion 7b on the innermost side in the tire radial direction preferably has an arc portion having a curvature radius r1 of more than 1 mm. The first wide portion 7b having such a configuration inhibits crack from occurring due to concentration of strain, and contributes to enhancement of durability of the tire 1. From such a viewpoint, the curvature radius r1 of the bottom portion 7c of the first wide portion 7b is more preferably more than 1.3 mm.

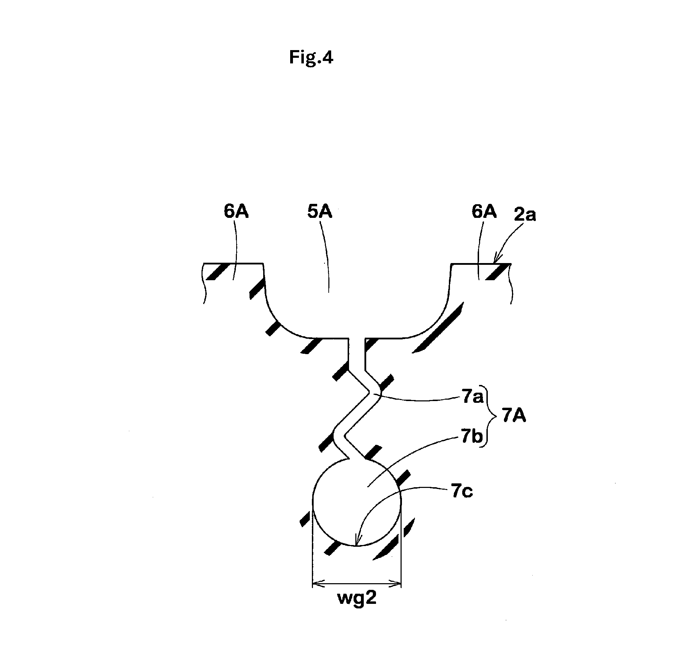

FIG. 4 is a cross-sectional view of the first shoulder sipe 7A according to another embodiment. As shown in FIG. 4, for example, the first narrow portion 7a of the first shoulder sipe 7A may zigzag in the sipe depth direction. The first shoulder sipe 7A having such a configuration allows wall surfaces to effectively support each other when a load is applied, and can enhance stiffness of the shoulder land portion 4A during contact with the ground, so that resistance to shoulder uneven wear in the tire 1 can be enhanced.

For example, the first narrow portion 7a of the first shoulder sipe 7A may zigzag in the sipe longitudinal direction, or the first shoulder sipe 7A may be a 3D sipe in which the first narrow portion 7a zigzags in the sipe longitudinal direction and the sipe depth direction, which are not shown. The first shoulder sipe 7A having such a configuration allows wall surfaces to more effectively support each other when a load is applied, and can further enhance resistance to shoulder uneven wear in the tire 1.

In a case where the amplitude of the zigzag of the first narrow portion 7a in the sipe longitudinal direction is less than the maximum width wg2 of the first wide portion 7b, the first wide portion 7b of the first shoulder sipe 7A preferably extends linearly in the sipe longitudinal direction. In a case where the amplitude of the zigzag of the first narrow portion 7a in the sipe longitudinal direction is greater than the maximum width wg2 of the first wide portion 7b, for example, the first wide portion 7b of the first shoulder sipe 7A may also zigzag in the sipe longitudinal direction.

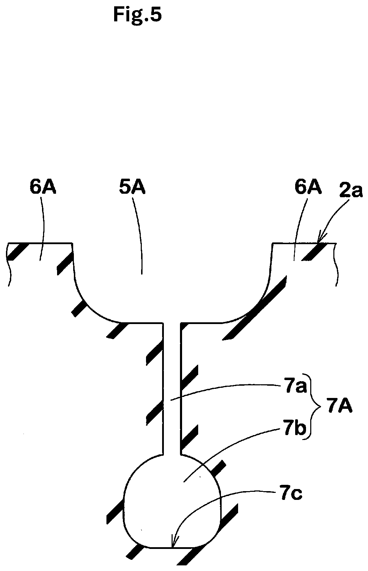

FIG. 5 is a cross-sectional view of the first shoulder sipe 7A according to still another embodiment. As shown in FIG. 5, for example, the bottom portion 7c of the first wide portion 7b of the first shoulder sipe 7A on the innermost side in the tire radial direction may be linearly formed. The first shoulder sipe 7A having such a configuration can increase the volume of the first wide portion 7b, and further enhance wet performance of the tire 1 at the late stage of wear.

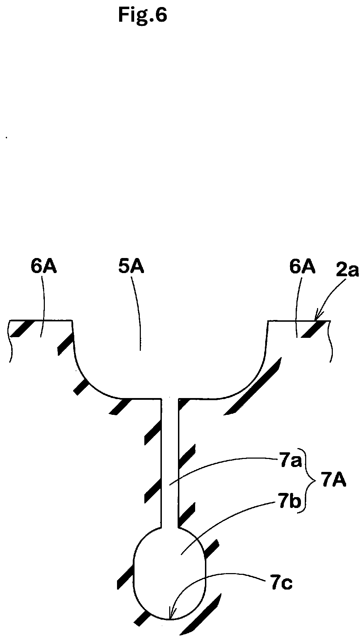

FIG. 6 is a cross-sectional view of the first shoulder sipe 7A according to still another embodiment. As shown in FIG. 6, for example, the first wide portion 7b of the first shoulder sipe 7A may have an oval shape or ellipsoidal shape which is elongated in the tire radial direction. The first shoulder sipe 7A having such a configuration can increase the volume of the first wide portion 7b, and further enhance wet performance of the tire 1 at the late stage of wear.

As shown in FIG. 1, for example, the plurality of land portions 4 include a middle land portion 4B demarcated between the shoulder circumferential groove 3A and the middle circumferential groove 3B, and a crown land portion 4C demarcated between the middle circumferential groove 3B and the crown circumferential groove 3C. In the present embodiment, the middle land portion 4B and the crown land portion 4C each have a polygonal shape in a planar view, similarly to the shoulder land portion 4A.

For example, the middle land portion 4B has a plurality of middle lateral grooves 5B extending across the middle land portion 4B, and a plurality of middle blocks 6B demarcated by the plurality of middle lateral grooves 5B. For example, the crown land portion 4C has a plurality of crown lateral grooves 5C extending across the crown land portion 4C, and a plurality of crown blocks 6C demarcated by the plurality of crown lateral grooves 5C. The tire 1 including the land portions 4 having such a configuration can enhance a grip force by an edge effect of the middle blocks 6B and the crown blocks 6C during running on a snow road surface, so that on-snow performance can be enhanced.

The groove depth d5 of the middle lateral groove 5B in the tire radial direction is preferably greater than the groove depth d1 of the shoulder lateral groove 5A in the tire radial direction. The middle lateral groove 5B having such a configuration can enhance drainage performance on the inner side in the tire axial direction and can enhance wet performance of the tire 1.

The groove depth d5 of the middle lateral groove 5B in the tire radial direction is preferably less than the groove depth d2 of the shoulder circumferential groove 3A in the tire radial direction. The middle lateral groove 5B having such a configuration inhibits the middle block 6B from being excessively deformed during contact with the ground, and contributes to enhancement of uneven wear resistance of the tire 1.

For example, the middle block 6B has a middle slot 6a in a portion opposing the crown lateral groove 5C. For example, the crown block 6C has a crown slot 6b in a portion opposing the middle lateral groove 5B. The middle slot 6a and the crown slot 6b each having such a configuration can enhance drainage performance in cooperation with the crown lateral groove 5C and the middle lateral groove 5B, and enhance wet performance of the tire 1.

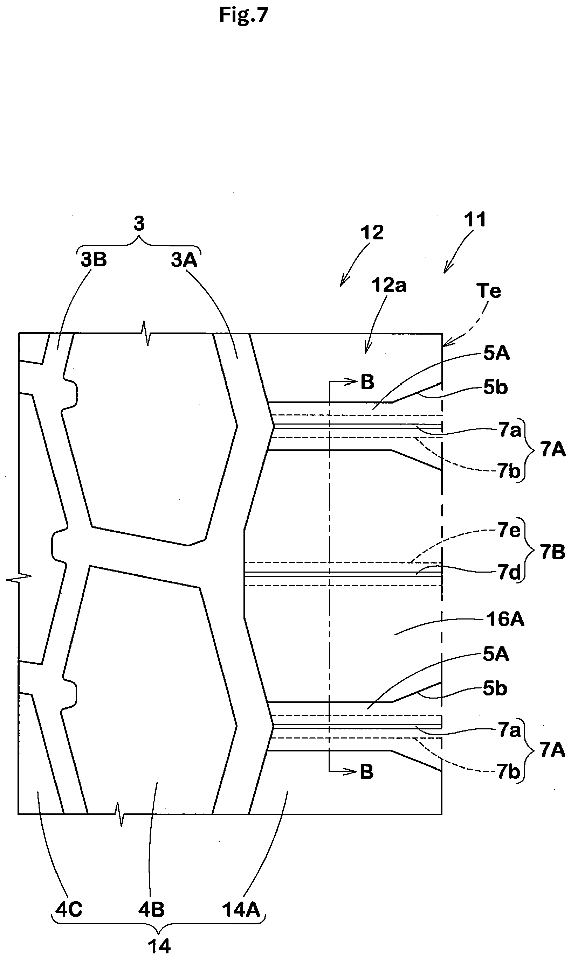

FIG. 7 is a partial development of a tread portion 12 of a tire 11 according to a second embodiment. The same components as in the above-described embodiment are denoted by the same reference characters, and the description thereof is omitted. As shown in FIG. 7, the tire 11 of the second embodiment has the tread portion 12, similarly to the tire 1 described above.

The tread portion 12 of the second embodiment has the plurality of circumferential grooves 3 extending in the tire circumferential direction, and a plurality of land portions 14 demarcated by the plurality of circumferential grooves 3, similarly to the tread portion 2 described above. In the second embodiment, the plurality of land portions 14 include a shoulder land portion 14A demarcated between the shoulder circumferential groove 3A and the tread end Te, similarly to the land portions 4 described above. The tread portion 12 having such a configuration can inhibit deformation of the land portion 14 during contact with the ground, and contributes to enhancement of resistance to shoulder uneven wear in the tire 11, similarly to the tread portion 2 described above.

In the second embodiment, the shoulder land portion 14A has a plurality of shoulder lateral grooves 5A extending across the shoulder land portion 14A, and a plurality of shoulder blocks 16A demarcated by the plurality of shoulder lateral grooves 5A, similarly to the shoulder land portion 4A described above. The tire 11 including the land portions 14 having such a configuration is suitable for exhibiting performance required as an all-season tire, similarly to the tire 1 described above.

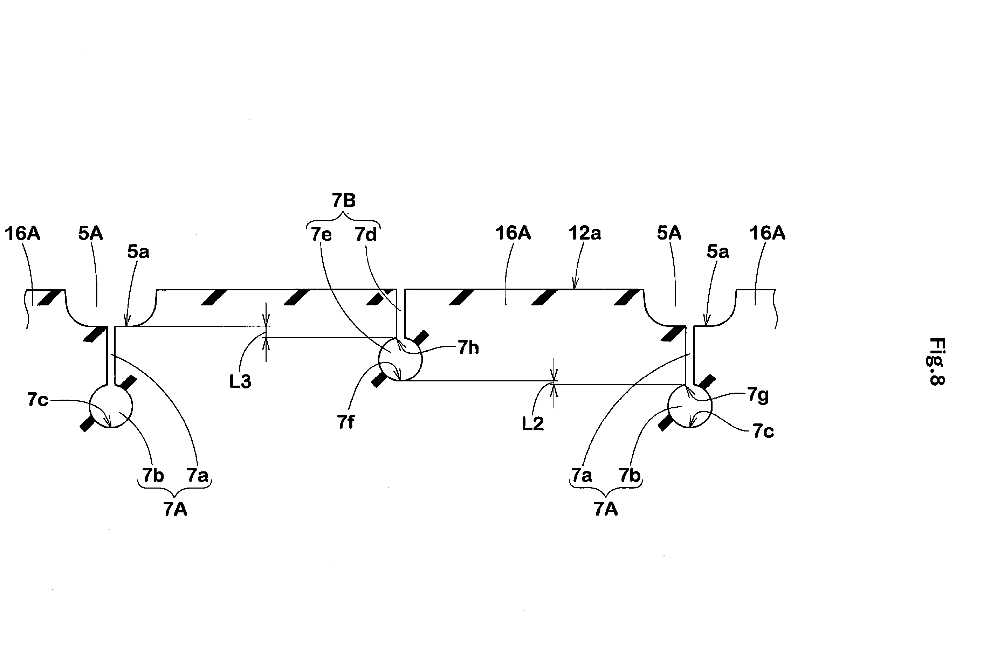

FIG. 8 is a cross-sectional view taken along a line B-B in FIG. 7. As shown in FIG. 7 and FIG. 8, the shoulder block 16A of the second embodiment has a second shoulder sipe 7B extending across the shoulder block 16A. The second shoulder sipe 7B having such a configuration can enhance drainage performance while allowing the shoulder block 16A to maintain high stiffness.

The second shoulder sipe 7B preferably includes a second narrow portion 7d and a second wide portion 7e, similarly to the first shoulder sipe 7A described above. In the second embodiment, the second narrow portion 7d has a small width in the direction orthogonal to the sipe longitudinal direction on the outer side in the tire radial direction. In the second embodiment, the second wide portion 7e has a large width in the direction orthogonal to the sipe longitudinal direction on the side inward of the second narrow portion 7d in the tire radial direction. The second shoulder sipe 7B having such a configuration can promote drainage since the second wide portion 7e is exposed at the intermediate stage of wear, and can enhance wet performance of the tire 1 at the intermediate stage of wear.

As shown in FIG. 8, in the second embodiment, a bottom portion 7f of the second wide portion 7e on the innermost side in the tire radial direction is disposed tire-radially outward of an outer end 7g of the first wide portion 7b in the tire radial direction. The shoulder land portion 14A having such a configuration can assure drainage performance at the intermediate stage of wear by the second wide portion 7e, and assure drainage performance at the late stage of wear by the first wide portion 7b.

A distance L2 in the tire radial direction between the bottom portion 7f of the second wide portion 7e and the outer end 7g of the first wide portion 7b is preferably 2.0 mm or less. In a case where the distance L2 between the bottom portion 7f of the second wide portion 7e and the outer end 7g of the first wide portion 7b is 2.0 mm or less, drainage performance from the intermediate stage of wear to the late stage of wear can be continuously assured, and wet performance of the tire 1 can be enhanced. From such a viewpoint, the distance L2 between the bottom portion 7f of the second wide portion 7e and the outer end 7g of the first wide portion 7b is more preferably 1.0 mm or less.

In the second embodiment, an outer end 7h of the second wide portion 7e in the tire radial direction is disposed inward of the groove bottom 5a of the shoulder lateral groove 5A in the tire radial direction. The shoulder land portion 14A having such a configuration can assure drainage performance at the initial stage of wear by the shoulder lateral groove 5A and assure drainage performance at the intermediate stage of wear by the second wide portion 7e.

A distance L3 in the tire radial direction between the outer end 7h of the second wide portion 7e and the groove bottom 5a of the shoulder lateral groove 5A is preferably 2.0 mm or less. In a case where the distance L3 between the outer end 7h of the second wide portion 7e and the groove bottom 5a of the shoulder lateral groove 5A is 2.0 mm or less, drainage performance from the initial stage of wear to the intermediate stage of wear can be continuously assured, and wet performance of the tire 1 can be enhanced. From such a viewpoint, the distance L3 between the outer end 7h of the second wide portion 7e and the groove bottom 5a of the shoulder lateral groove 5A is more preferably 1.0 mm or less.

Although the particularly preferable embodiments of the present invention have been described above in detail, the present invention is not limited to the above-described embodiments, and various modifications can be made to implement the present invention.

### [Additional notes]

The present invention is as follows.

### [Present invention 1]

A tire including
a tread portion, wherein
the tread portion has a plurality of circumferential grooves extending in a tire circumferential direction, and a plurality of land portions demarcated by the circumferential grooves,
the circumferential grooves include a shoulder circumferential groove disposed closest to a tread end,
the land portions include a shoulder land portion demarcated between the shoulder circumferential groove and the tread end,
the shoulder land portion has a plurality of shoulder lateral grooves extending across the shoulder land portion, and a shoulder block demarcated by the shoulder lateral grooves,
a groove depth of the shoulder lateral groove in a tire radial direction is less than a groove depth of the shoulder circumferential groove in the tire radial direction,
a first shoulder sipe extending from the shoulder circumferential groove to the tread end is disposed in a groove bottom of the shoulder lateral groove,
the first shoulder sipe includes a first narrow portion having a small width in a direction orthogonal to a sipe longitudinal direction on an outer side in the tire radial direction, and a first wide portion having a large width in the direction orthogonal to the sipe longitudinal direction on a side inward of the first narrow portion in the tire radial direction, and
a maximum length in the tire circumferential direction is greater than a maximum width in a tire axial direction in the shoulder block.

### [Present invention 2]

The tire according to the present invention 1, wherein the groove depth of the shoulder lateral groove in the tire radial direction is 0.15 to 0.45 times the groove depth of the shoulder circumferential groove in the tire radial direction.

### [Present invention 3]

The tire according to the present invention 1 or 2, wherein the maximum length of the shoulder block in the tire circumferential direction is 1.2 to 1.6 times the maximum width of the shoulder block in the tire axial direction.

### [Present invention 4]

The tire according to any one of the present inventions 1 to 3, wherein
the tread portion includes a reinforcing layer disposed inward of the land portions in the tire radial direction, and
the reinforcing layer includes a band layer in which a steel cord is helically wound at an angle of 5° or less relative to the tire circumferential direction.

### [Present invention 5]

The tire according to the present invention 4, wherein
the reinforcing layer includes a belt layer having a plurality of belt plies in which steel cords are aligned at an angle of 10 to 50° relative to the tire circumferential direction, and
at least one of the belt plies of the belt layer is disposed inward of the band layer in the tire radial direction.

### [Present invention 6]

The tire according to the present invention 4 or 5, wherein an end portion of the band layer in the tire axial direction is disposed outward of the shoulder circumferential groove in the tire axial direction.

### [Present invention 7]

The tire according to any one of the present inventions 1 to 6, wherein a maximum width of the first wide portion in the direction orthogonal to the sipe longitudinal direction is less than a minimum groove width of the shoulder lateral groove at a ground contact surface.

### [Present invention 8]

The tire according to the present invention 7, wherein the maximum width of the first wide portion is 0.30 to 0.85 times the minimum groove width of the shoulder lateral groove.

### [Present invention 9]

The tire according to any one of the present inventions 1 to 8, wherein the first narrow portion of the first shoulder sipe zigzags in the sipe longitudinal direction and a sipe depth direction.

### [Present invention 10]

The tire according to any one of the present inventions 1 to 9, wherein
the shoulder block has a second shoulder sipe extending across the shoulder block, and
the second shoulder sipe includes a second narrow portion having a small width in the direction orthogonal to the sipe longitudinal direction on the outer side in the tire radial direction, and a second wide portion having a large width in the direction orthogonal to the sipe longitudinal direction on a side inward of the second narrow portion in the tire radial direction.

### [Present invention 11]

The tire according to the present invention 10, wherein a bottom portion of the second wide portion on an innermost side in the tire radial direction is disposed tire-radially outward of an outer end of the first wide portion in the tire radial direction.

### [Present invention 12]

The tire according to the present invention 10 or 11, wherein an outer end of the second wide portion in the tire radial direction is disposed tire-radially inward of the groove bottom of the shoulder lateral groove.

## Claims

1. A tire (1) comprising
a tread portion (2), wherein
the tread portion (2) has a plurality of circumferential grooves (3) extending in a tire circumferential direction, and a plurality of land portions (4) demarcated by the circumferential grooves (3),
the circumferential grooves (3) include a shoulder circumferential groove (3A) disposed closest to a tread end (Te),
the land portions (4) include a shoulder land portion (4A) demarcated between the shoulder circumferential groove (3A) and the tread end (Te),
the shoulder land portion (4A) has a plurality of shoulder lateral grooves (5A) extending across the shoulder land portion (4A), and a shoulder block (6A) demarcated by the shoulder lateral grooves (5A),
a groove depth (d1) of the shoulder lateral groove (5A) in a tire radial direction is less than a groove depth (d2) of the shoulder circumferential groove (3A) in the tire radial direction,
a first shoulder sipe (7A) extending from the shoulder circumferential groove (3A) to the tread end (Te) is disposed in a groove bottom (5a) of the shoulder lateral groove (5A),
the first shoulder sipe (7A) includes a first narrow portion (7a) having a small width in a direction orthogonal to a sipe longitudinal direction on an outer side in the tire radial direction, and a first wide portion (7b) having a large width in the direction orthogonal to the sipe longitudinal direction on a side inward of the first narrow portion (7a) in the tire radial direction, and
a maximum length (L1) in the tire circumferential direction is greater than a maximum width (W1) in a tire axial direction in the shoulder block (6A).

2. The tire (1) according to claim 1, wherein the groove depth (d1) of the shoulder lateral groove (5A) in the tire radial direction is 0.15 to 0.45 times the groove depth (d2) of the shoulder circumferential groove (3A) in the tire radial direction.

3. The tire (1) according to claim 1 or 2, wherein the maximum length (L1) of the shoulder block (6A) in the tire circumferential direction is 1.2 to 1.6 times the maximum width (W1) of the shoulder block (6A) in the tire axial direction.

4. The tire (1) according to any one of claims 1 to 3, wherein
the tread portion (2) includes a reinforcing layer (8) disposed inward of the land portions (4) in the tire radial direction, and
the reinforcing layer (8) includes a band layer (9) in which a steel cord is helically wound at an angle of 5° or less relative to the tire circumferential direction.

5. The tire (1) according to claim 4, wherein
the reinforcing layer (8) includes a belt layer (10) having a plurality of belt plies (10A, 10B, 10C) in which steel cords are aligned at an angle of 10 to 50° relative to the tire circumferential direction, and
at least one of the belt plies (10A, 10B, 10C) of the belt layer (10) is disposed inward of the band layer (9) in the tire radial direction.

6. The tire (1) according to claim 4 or 5, wherein an end portion (9a) of the band layer (9) in the tire axial direction is disposed outward of the shoulder circumferential groove (3A) in the tire axial direction.

7. The tire (1) according to any one of claims 1 to 6, wherein a maximum width (wg2) of the first wide portion (7b) in the direction orthogonal to the sipe longitudinal direction is less than a minimum groove width (wg3) of the shoulder lateral groove (5A) at a ground contact surface (2a).

8. The tire (1) according to claim 7, wherein the maximum width (wg2) of the first wide portion (7b) is 0.30 to 0.85 times the minimum groove width (wg3) of the shoulder lateral groove (5A).

9. The tire (1) according to any one of claims 1 to 8, wherein the first narrow portion (7a) of the first shoulder sipe (7A) zigzags in the sipe longitudinal direction and a sipe depth direction.

10. The tire (1, 11) according to any one of claims 1 to 9, wherein
the shoulder block (16A) has a second shoulder sipe (7B) extending across the shoulder block (16A), and
the second shoulder sipe (7B) includes a second narrow portion (7d) having a small width in the direction orthogonal to the sipe longitudinal direction on the outer side in the tire radial direction, and a second wide portion (7e) having a large width in the direction orthogonal to the sipe longitudinal direction on a side inward of the second narrow portion (7d) in the tire radial direction.

11. The tire (1, 11) according to claim 10, wherein a bottom portion (7f) of the second wide portion (7e) on an innermost side in the tire radial direction is disposed tire-radially outward of an outer end (7g) of the first wide portion (7b) in the tire radial direction.

12. The tire (1, 11) according to claim 10 or 11, wherein an outer end (7h) of the second wide portion (7e) in the tire radial direction is disposed tire-radially inward of the groove bottom (5a) of the shoulder lateral groove (5A).
